Europäisches Patentamt

**European Patent Office**

**Office européen des brevets**

(11) Publication number: **0 344 672**
**A1**

(12) **EUROPEAN PATENT APPLICATION**

(21) Application number: **89109624.0**

(22) Date of filing: **29.05.89**

(51) Int. Cl.⁴: **G09F 27/00 , H04M 11/08**

(30) Priority: **27.05.88 US 199483**

(43) Date of publication of application:
**06.12.89 Bulletin 89/49**

(84) Designated Contracting States:
**AT BE CH DE ES FR GB GR IT LI LU NL SE**

(71) Applicant: **ELECTRIC AVENUE, INC.**
**2500 West County Road 42 Suite 9A**
**Burnsville Minnesota 55337(US)**

(72) Inventor: **Paschke, Robert A.**
**2500 West County Rd 42,Suite 9A**
**BURNSVILLE Minnesota 55337(US)**
Inventor: **Mabusth, Scott**
**740 North Brown Road,**
**Long Lake, Minnesota 55356(US)**

(74) Representative: **Buzzi, Franco et al**
**c/o Jacobacci-Casetta & Perani S.p.A. Via**
**Alfieri, 17**
**I-10121 Torino(IT).**

(54) **Consumer communication and information system.**

(57) The distribution of information and advertising to the public is enhanced by providing a pay telephone structure that also includes an electronic display under computer control. Information can be transmitted to the display by means of the pay telephone. The display can also include user controls to access selected information from the computer or from external databases via the telephone.

FIG. 1

## CONSUMER COMMUNICATION AND INFORMATION SYSTEM

Technical Field

The invention relates to the field of consumer or public information and communication systems and more particularly to the field of pay telephone communication systems.

Background of the Invention

With the proliferation of information that is available to the public through, for example, publicly accessible data bases, combined with the increased mobility of the public, it has become increasingly desirable to provide methods to readily deliver this information in locations that are open to the public such as shopping malls and airports. There are some existing systems on the market today such as the Bunker Ramo stock quote machines that are occasionally found in airports and hotels but they are both limited in the information they can supply and flexibility of use.

At the same time it has become increasing desirable to expand the delivery of advertising messages and information to the public. For example, it is not uncommon to use various types of electronic displays such as CRT monitors located in the Chicago Transit Authority's "El" stations to display advertising and information.

Another approach to the public dissemination of advertising messages has been to place advertising on telephone booths as described in U.S. Patent 4,706,399, Des. 263,102 and Des. 263,264. However, this approach is both inflexible and expensive because the space available on the booths effectively limits the number of advertising messages along with the fact that it is costly to change the advertising because this approach requires physical replacement of the printed advertising messages on the booths.

Summary of the Invention

It is, therefore, an object of the invention to provide a consumer or public information and advertising system having a pay telephone structure that includes an electronic information storage mechanism and an electronic display for displaying the information in the storage mechanism.

It is a further object of the invention to provide a consumer or public information system that includes a pay telephone structure having a processor and a storage mechanism for storing display information received over the pay telephone and further includes an electronic display under the control of the processor to display the information. The system can also include a central site for a group of such pay telephone structures which is connected to the pay telephones by telephone lines or is alternatively connected to the storage mechanisms by other means such as a satellite communication or an FM radio system where the display information is transmitted to the storage mechanism from the central site. Also the information transmitted to the pay telephone structure can include timing data to cause the displays to display certain selected information or advertisements on certain days or at certain times.

It is an additional object of the invention to provide an interactive consumer communication and display system that includes a central site; a group of location units each of which include a pay telephone, a microprocessor, a data storage memory and an electronic display with user input controls such that a user is able to select certain categories and individual items of information in each category from said data memory for display. The information in the data memory is transmitted from the central site or alternatively the user control on the display can be used to access information directly from commercial data bases.

Brief Description of the Drawings

FIG. 1 is a block diagram of a consumer communication and information system according to the invention;

FIG. 2 is a perspective view of a location unit or pay telephone housing for use with the system of FIG. 1;

FIG. 3 is a block diagram of the electronic components of the location unit of FIG. 2;

FIGS. 4-9 are representative examples of display screens for display on the locations units of FIG. 2; and

FIGS. 10A-10B are flow charts representing computer program logic used in the location units of FIG. 3.

Detailed Description of the Invention

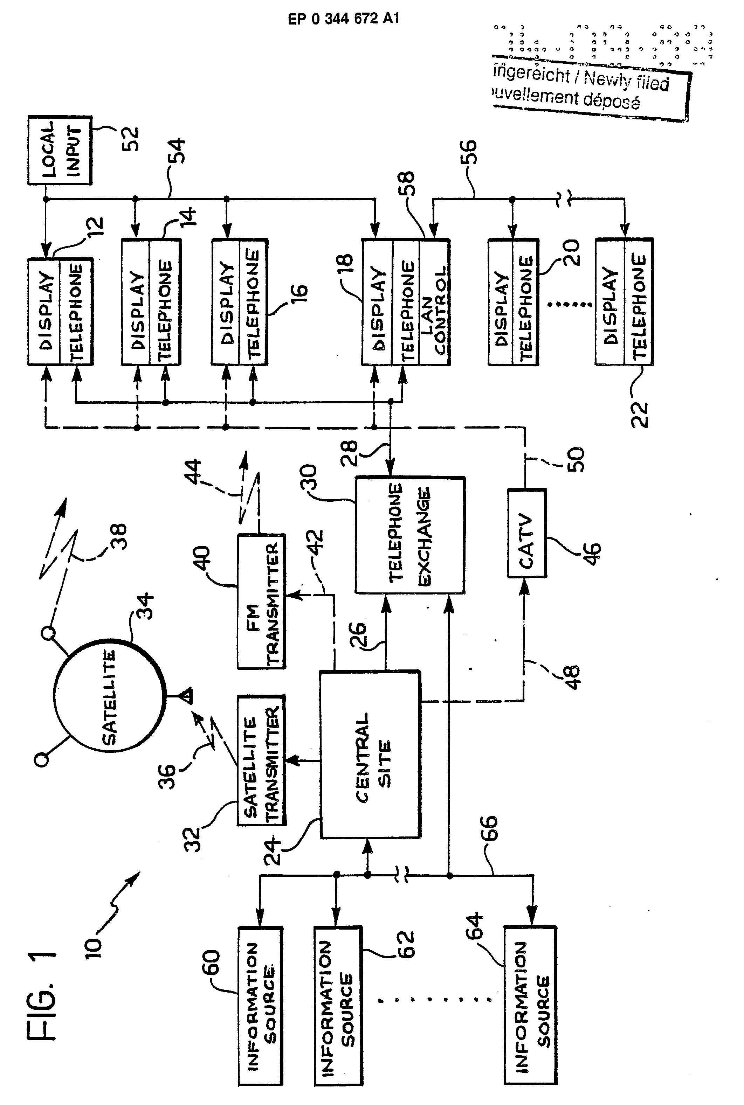

In FIG. 1 is provided a block diagram of a consumer or public information and communication system indicated generally at 10. The system 10 includes a number of location units 12-22 each of which includes an electronic display and a public telephone such as a pay telephone. Location units 12-22 will typically be located in areas open to the public such as airports, shopping malls, hotel lobbies and the like. The system 10 can include any number of such units 12-22 and in some cases several thousand.

Also included in the system 10 is a central site 24 that will normally include various types of electronic equipment such as computers, displays, work stations, modems and other communication equipment. Each of the location units 12-22 is in direct communication with the central site 24. For example, the commercial telephone system can be used as represented in FIG. 1 by lines 26 and 28 and a telephone exchange 30. Alternatively the central site 24 can communicate with the location units 12-22 by a satellite communications network including a transmitter 32 and a satellite 34 where data transmission is indicated by dashed lines 36 and 38. Communication with the location units 12-22 can also be achieved by using an FM radio transmission system as indicated by a transmitter 40 and dashed lines 42 and 44 or a cable television system 46. In the CATV 46 approach, digital data from the central site 24 can be transmitted over dashed lines 48 and 50 to the location units 12-22 using a side band of the television signals as is well understood in the art.

In any particular embodiment of the invention the method of communication between the central site 24 and the location units 12-22 will depend upon a number of factors such as: the number and geographical location of the location units 12-22; the amount and frequency of data to be transmitted and the relative cost of each method. For simplicity, the operation of the system 10 will be discussed in terms of telephone communications.

The system 10 of FIG. 1 can further include an input terminal 52 connected to one or more location units 12-18 as represented by a line 54. This terminal 52 can be used by a proprietor of a group of location units 12-18, for instance a shopping mall manager, to input data into the local units 12-18 in addition to the data or information received from the central 24 site over the telephone lines 28. This capability increases the overall flexibility of the system 10 by permitting the proprietor to insert special messages for display such as information relating to a special event or even the name of a lost child.

Another method for inputting data to a group of location units 18-22 is to provide a local area network (LAN) indicated by a line 56 connecting location units 20 and 22 to master location unit 18 which is equipped with a LAN control unit 58. Utilizing this arrangement data or information need only be supplied to the master location unit 18 by the central site 24 or the local input terminal 52.

External sources of information such as current stock market quotes, weather and other commercially available data bases as represented by information sources 60-64 are connected to the system 10 by a telephone line 66. This information can be accessed by the central site 24 or directly by the location units 12-22 operating in an interactive mode as will be described below.

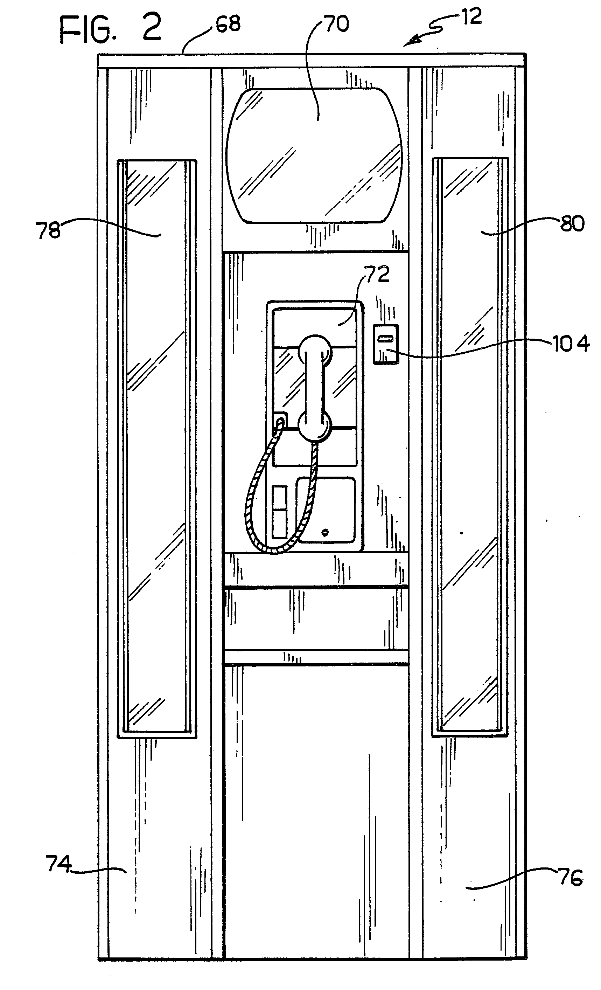

In FIG. 2 is illustrated the preferred embodiment of the physical structure or housing of the location units 12-22. The preferred embodiment of the location units 12-22 housing 68 construction is described in detail in the copending U.S. patent application entitled: PAY TELEPHONE ENCLOSURE Serial No. 199,484 filed May 27, 1988. Enclosed in the housing 68 is a display device 70 which is preferably a touch screen cathode ray tube (CRT). Also mounted to the front of the housing 68 is a public telephone 72 which will normally be a conventional pay telephone but in some applications or embodiments of the invention can be a courtesy telephone of the type used for example in airports. In alternative embodiments of the invention the CRT 70 can be replaced with a display such as a six line, forty character per line character vacuum fluorescent display mounted directly on the telephone 72. Applied to two side panels 74 and 76 are two translucent back lit panels 78 and 80 on which information or advertising can be printed.

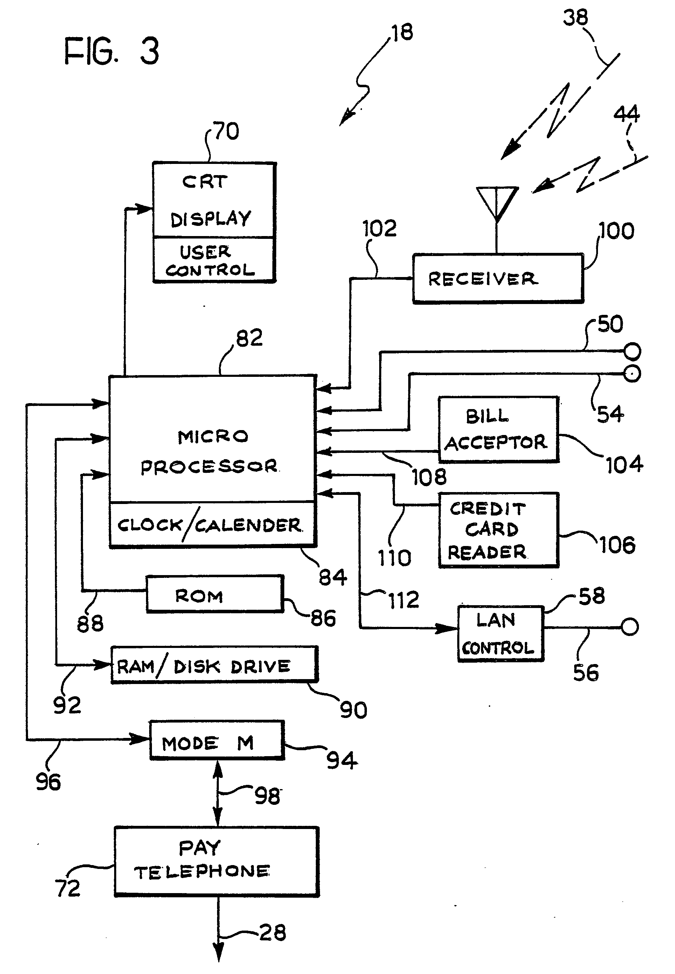

In FIG. 3 as shown in block diagram form are the various functional elements of the preferred embodiment of a location unit 18. Controlling the unit is a microprocessor or microcomputer 82 which preferably has video graphics capability such as the Motorola 68000. Also the processor 82 includes a clock/calendar indicated at 84. A read only memory 86 containing operating system software and other control programs is connected to the processor 82 by a line 88, and a non-volatile random access memory 90 for storing display data and control programs is connected to the processor by a line 92. In the preferred embodiment of the invention the RAM 92 is a semiconductor random access memory with battery back-up but alternatively a floppy disk type memory can be used as well.

Communications between a location unit 18 and the central site 24 are facilitated by a modem 94 connected by lines 96 and 98 between the processor 82 and the telephone 72. As described in connection with FIG. 1 alternate communications with the central site 24 can be provided by a receiver 100 connected to the processor 82 by a line 102 to receive radio signals from the satellite 34 or the FM transmitter 40.

In addition in certain embodiments of the invention a bill acceptor 104 and a credit card reader 106 are connected by lines 108 and 110 respectively to the processor 82. As indicated before, the location unit 18 can include a LAN control unit 58 connected to the processor 82 by a line 112.

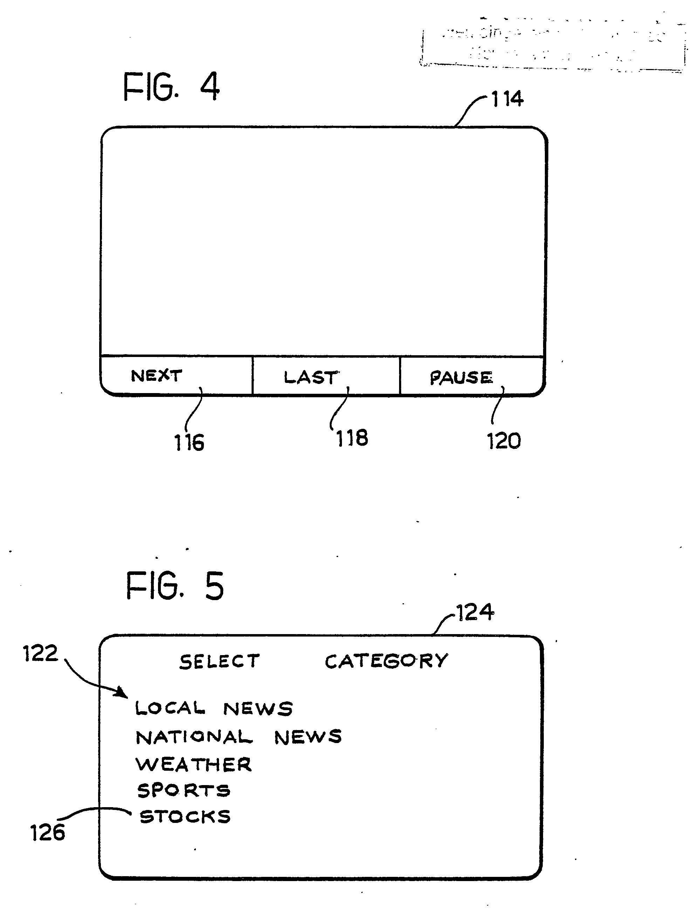

Operation of the various embodiments of the invention will now be described. In its most basic form the consumer communication and information system 10 is composed of one or more location units 12-22 having the processor 82, memories 86 and 90, telephone 72 and the display 70 all of which are contained in the housing 68. The RAM 90 can contain for example twenty video graphic display frames of advertising or other information to be displayed on the display 70 at six second intervals under control of the processor 82 in a predetermined sequence. The flexibility and usefulness to the public of this embodiment of the invention can be increased by providing the display 70 with a user control capability. FIG. 4 provides an illustration of a CRT screen 114 where the information frames are displayed in sequence that also includes a group of user touch or control areas 116-120. By simply touching area 120 a member of the public can pause the display at an advertisement or frame of information that is of particular interest to him. By the same token, the individual can by pressing area 116 select the next display frame or by pressing area 118 he can select the last frame displayed. This provides the user with the ability to select and hold the information on the screen in which he has a particular interest. By utilizing the location unit 12 construction shown in FIG. 2 where the telephone 72 is readily accessible to an individual viewing the display 70; a significant advance in utility to the public is achieved. As an example of the synergy of this arrangement, assume that the location unit 12 is located in an airport and the information being displayed on the screen 114 is a series of hotel and airline advertisements. The user control areas 116-118 give the member of the public the opportunity to select the hotel or airline in which he has an interest while the immediate accessibility of the telephone 72 allows him to call the hotel or airline while viewing the ad. If, as is not infrequently the case, the first call does not result in a satisfactory response from the selected hotel or airline, the individual can readily select another by using the control areas 116-120.

This embodiment of the invention can be further enhanced by storing additional display frames in memory 90 along with timing and date information. By using the timing information the processor 82 in combination with the clock/calendar 84 can alter the number and order of frames being displayed on the display 70. For example, an advertisement for a store's special sale can be stored in memory 90 for display on a particular date in the future. This capability is particularly useful where the memory 90 is a floppy disk because it will substantially reduce the need to frequently load new disks into the drive 90.

In another embodiment of the invention the central site 24 is used to load display and timing data into the location units 12-22 thus eliminating the requirement to physically access the location units 12-22 for this task. Further by using unique addresses for each of the location units 12-22 the central site 24 can transmit by the various methods illustrated in FIG. 1 display information and timing data tailored for specific location units 12-22. For instance ads and information for display units, say units 12-16, located in a shopping mall can be transmitted by the central site 24 while at substantially the same time display information for location units 18-22 located, for example, in an airport is likewise being transmitted. Another substantial advantage of the system 10 of FIG. 1 is that it is possible to rapidly update information in the location units 12-22. Take for example the case where the location units 12-22 contain current stock prices, the central site 24 can access one of the public information sources 60 for current prices and transmit this information to the location units 12-22 on a periodic basis such as every thirty minutes.

Since the amount of information that can be stored in memory 90 for certain categories of information can exceed the display capability of display 70 such as all of the current stock quotes on the various stock exchanges, one embodiment of the invention provides members of the public the ability to select the individual information desired from such a category. An example of the operation of this embodiment for stock price information is illustrated by the display screens of FIGS. 5-9.

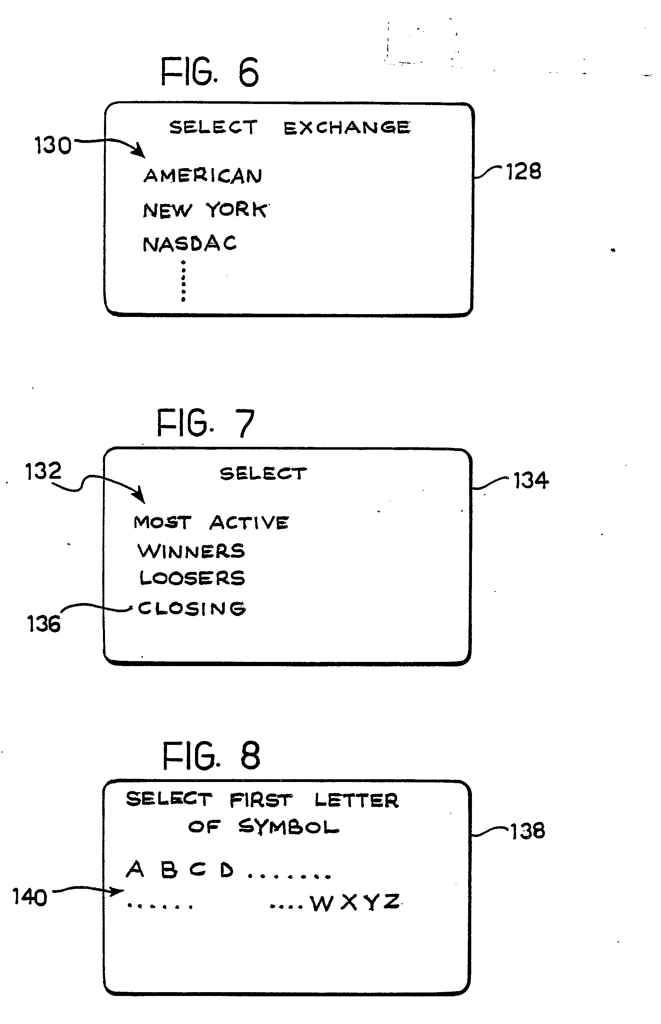

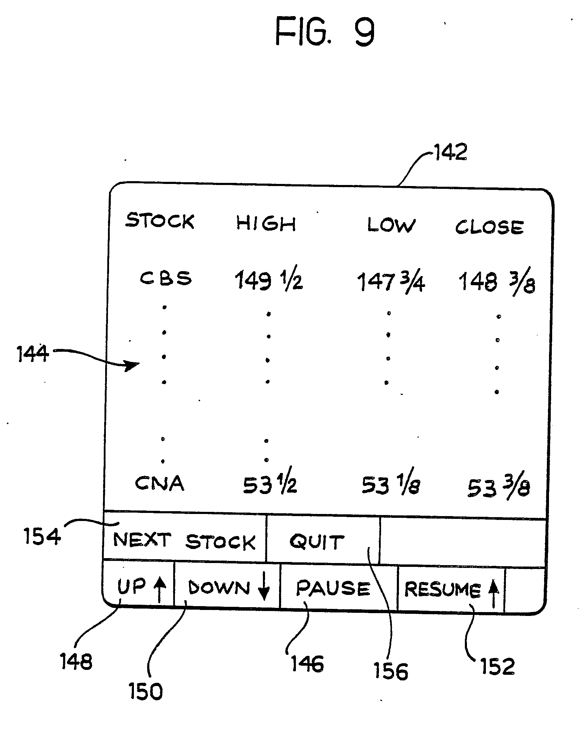

In a screen 124 of FIG. 5 the user is presented with a menu of the categories of information available in memory 90. Since it may be desirable to require the user to pay for the information he is requesting, the bill acceptor 104 is provided for that purpose as shown in FIGS. 2 and 3. After a bill has been accepted by the acceptor 104, the user selects the category of information desired from a list shown generally at 122 on the screen 124 by touching one of the elements of the list; in this case STOCKS 126. The processor 82 then causes a second screen 128 as shown in FIG. 6 to be displayed on display 70. The user again selects the desired exchange from a list 130 by touching the exchange name. Provision can also be made to display the type of stock information desired as shown by a list 132 displayed on a screen 134 of FIG. 7. Assuming the user desires the closing prices of stocks, he presses CLOSING 136 and the next screen 138 of FIG. 7 will be displayed. Because there are a very large number of stocks listed on the exchanges, too many to be displayed at any one time on display 70, a mechanism to select the particular stock desired is provided. To that end screen 138 displays the first letter of the various stock symbol as indicated at 140. The user then touches the letter corresponding to the desired stock from 140 which results in the display of a screen 142 in FIG. 9. As shown in this Figure, screen 142 includes a list of stocks with their high, low and closing prices as indicated at 144. In this embodiment of the invention the list 144 under control of the processor 82 will begin to scroll upwardly. The user is provided with the ability to stop the scrolling by touching PAUSE 146 or to scroll the list 144 upwardly or downwardly by touching UP 148 or DOWN 150 respectively. Resumption of scrolling can be obtained by the user by touching RESUME 152. Another stock price can be obtained by touching NEXT STOCK 154 which will result in the display of the screen 138 of FIG. 8. When the user is finished he can touch QUIT 156 which will cause the processor to display screen 124 of FIG. 5 or a default screen (not shown).

As can be appreciated the use of a touch screen in display 70 has a number of significant advantages including the elimination of the requirement for a user keyboard on the location units 12-22 as well as the ability to make it possible for the public to access large amounts of information rapidly with a minimum of confusion.

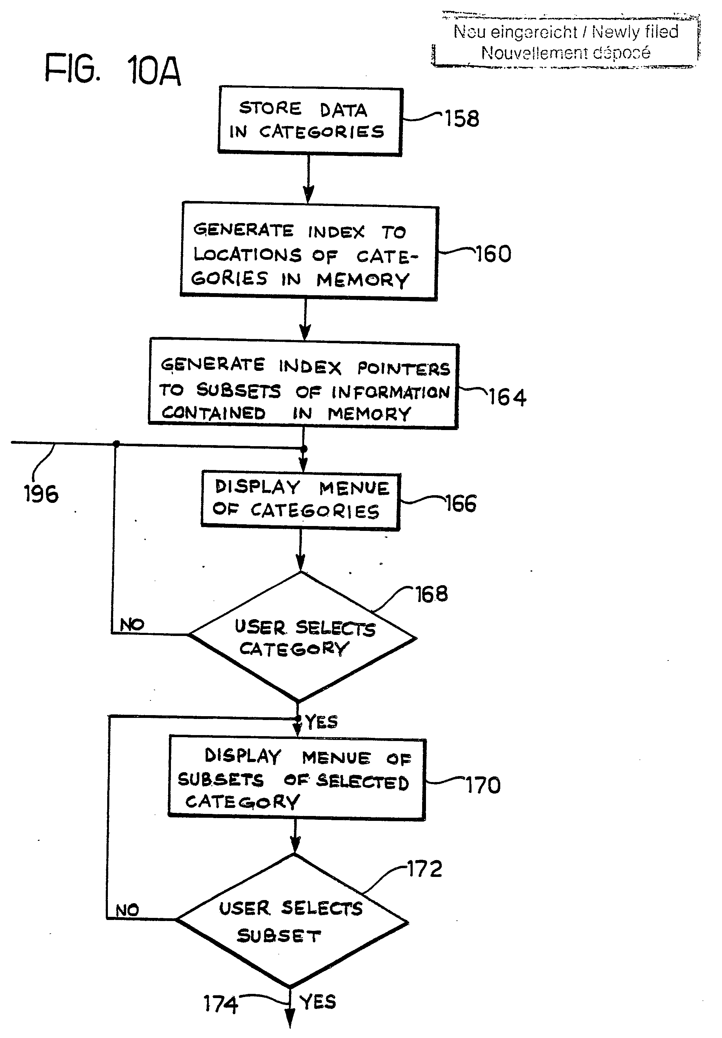

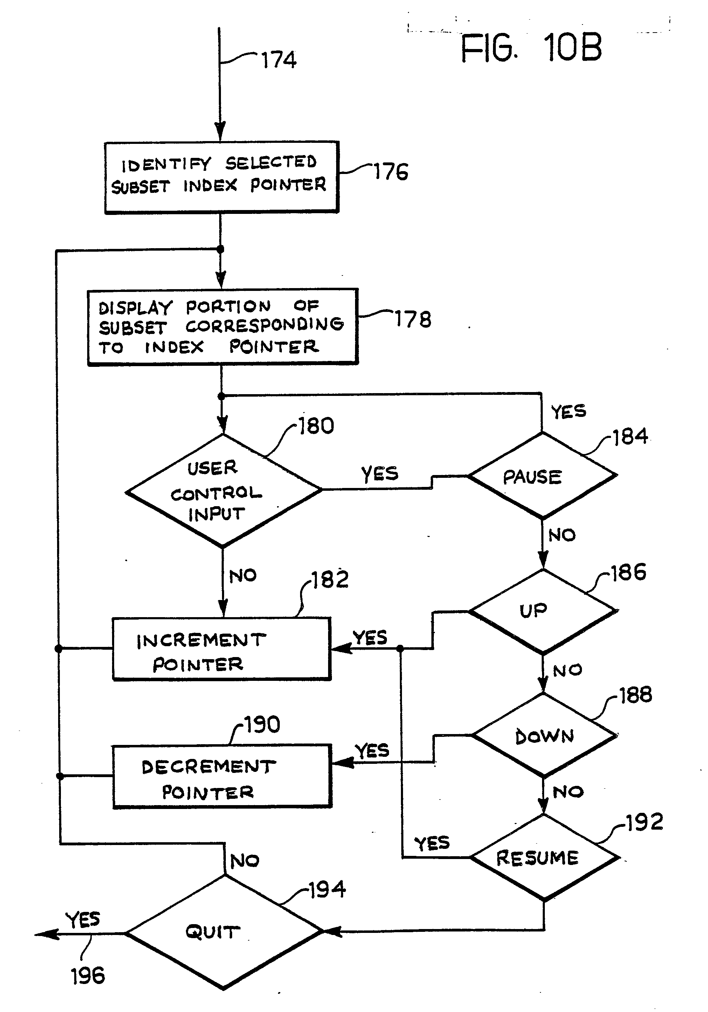

FIGS. 10A and 10B illustrate in flow chart form a computer program for storing information in memory 90 and accessing it such that the information can be displayed in the manner described above. As previously discussed information can be transmitted from the central site 24 to the memory 90 by a variety of methods which is represented in FIG. 10A at 158. Memory index pointers are generated for each category of information at 160. In the case where a category of information contains too many items to be displayed on display 70, it is broken down at 164 into subsets and associated memory pointers are generated.

When a user desires to access information a display of the menu of categories of information is generated on display 70 as shown at 166. Although it is not shown in Fig. 10A the processor 82 can be programmed to respond to the bill acceptor 104 or the credit card reader 106 to authorize the retrieval and display of certain categories of information. This display can correspond to screen 124 in FIG. 5. The processor 82 then periodically checks to determine if the user has selected one of the information categories as represented by a decision block 168. In the event the user has selected a category which has been broken down into subsets a menu such as screen 138 of FIG. 8 is displayed at 70. The processor 82 then determines at decision block 172 whether or not the user has selected a subset.

This logic is continued in FIG. 10B as indicated by a line 174 where at block 176 the selected subset pointer is identified and a first portion of the subset is displayed 178. The subset display can correspond to screen 142 of FIG. 9. At this point 180 the processor 82 checks for a user input and if none is received the pointer is incremented at 182 and the display is in effect scrolled up by one data item at 178. On the other hand if a PAUSE input is detected at 184 the current display is retained. In the event the UP command is detected at 186 the pointer is incremented 182 to display by one data item. Similarly the detection of a DOWN command at 188 will result in the decrementing of the pointer at 190 and the display is scrolled down by one item. A RESUME command at 192 will result in resumed scrolling of the display. The detection of the QUIT command at 194 can return the processor 82 to logic of FIG. 10A as indicated by line 196 or to another function or display.

The system 10 of FIG. 7 is not limited to accessing data contained in memory 90. For example the display 70 can be used in combination with the telephone 72 to directly access information in information sources 60-64. In this case the central site 24 is bypassed and telephone communication through the exchange 30 is provided by lines 28 and 66. In this embodiment of the invention standard access logic of the commercial data bases 60-64 is modified for use with a touch screen display. Also since payment to the commercial data base is normally required, the local unit 12 as shown in FIGS. 2 and 3 is provided with a credit card reader 106.

Another feature of the invention is the ability to provide an electronic merchandising capability. For example the telephone 72 can be a courtesy telephone in a dedicated system or alternatively 800 numbers can be provided if it is a pay telephone. The display 70 can be used to describe the goods being sold and the credit card reader 106 can be used to provide for direct payment.

It will thus be appreciated that the system 10 as described above provides an extremely flexible system for displaying advertising and other information to the public through use of location units 12-22 while at the same time permits the public to access other information for which charges can be made.

In summary, a consumer communication and information system has been disclosed, comprising a central site, a plurality location units wherein each of said units includes a support structure; a processor secured to said support structure; a pay telephone secured to said support structure and operatively connected to said processor, display means secured to said support structure and operatively connected to said processor for generating a public information display, and storage means secured to said structure and operatively connected to said processor for storing display information; and transmission means operatively connected between said central site and said location units for transmitting the consumer information from said central site to said processor.

Said transmission means includes telephone lines connected between said central site and said pay telephones wherein said display information is transmitted via said telephone lines through said pay telephone to said processor.

Said transmission means may include a satellite data transmission system adapted to transmit said display information from said central site to said processor.

Said transmission may include an FM radio transmission system adapted to transmit said display information from said central site to said processor.

Said transmission means may include a cable television system connected between said central site and said processor.

Said display means may include user control means for selecting said display information.

Said display means may include a CRT display having a touch screen and wherein said user control means include predetermined positions located an said touch screen responsive a user touch to cause predetermined selection of the display information.

The system may additionally include local input means operatively connected to said processor for transmitting display information to said processor from a local information source.

At least one of said location units may include a local area network master control unit operatively connected to the processor in said unit and a local area network system connected to said control unit and a predetermined number of said location units.

Said central site normally includes address means for selectively transmitting via said transmission means to selected ones of said location units predetermined display information associated with said selected location units.

Said address means additionally transmits via said transmission means timing data associated with said predetermined display information to said selected location units and wherein said processor includes clock/calendar means for causing the display of said predetermined display information in response to said timing data.

Said location units display a current sequence of display information frames and wherein said storage means stores a greater number of said frames than currently being displayed in said sequence of frames and wherein said processor is effective to add or delete said display information frames to said current sequence in response to said timing data.

An interactive consumer communication and information system has been disclosed, comprising, a central site, a plurality location units wherein each of said units includes a support structure; a processor secured to said support structure; a pay telephone secured to said support structure and operatively connected to said processor, display means secured to said support structure and operatively connected to said processor for generating a public information display, and storage means secured to said structure and operatively connected to said processor for storing display information; and transmission means including telephone lines connecting said central site and said pay telephone to a commercial telephone system for transmitting display information to said storage means from a data base via said pay telephone.

Said central site includes program means for periodically accessing said data bases via said transmission means and transmitting selected information data to said storage means.

Said display means includes user control means for selecting portions of said information data from said storage means for display on said display means.

Said processor means includes logic means responsive to said user control means for accessing data in said storage means for said display on said display means.

Said display means includes a touch screen and said user control means includes predetermined location on said touch screen.

Said display information is stored in said storage means in a plurality of information categories and wherein said display means in response to said user control means displays a menu of said categories.

Said logic means includes: means to separate the information in at least one of said information categories into subsets and means to display a menu of said subsets in response to said user control means.

Said logic means additionally includes means to display on said display means at least a portion of said selected subset in response to said user control means.

Said logic means additionally includes scrolling means for causing said selected subset to scroll on said display means.

Said logic means responds said user control means to stop said scrolling.

Said logic means respond to said user control means to selectively display portions of said selected subset.

Said logic means may additionally include access means responsive to said user control means for accessing data directly from said database via said telephone lines.

Said location unit additionally includes a credit card reader operatively connected to said access means.

Said location unit may additionally include a bill acceptor operatively connected to said logic means and wherein said logic means will only display predetermined information data on said display means in response to the acceptance of a bill.

A location unit for use with a consumer communication and information system has thus been disclosed, comprising: a support structure; a pay telephone secured to said support structure; a processor secured to said support structure; a modem operatively connected between said processor and said pay telephone; a digital memory containing information data operatively connected to said processor; a CRT display secured to said structure and operatively connected to said processor to display said information data.

Said CRT display includes a touch screen and wherein said processor is responsive to said touch screen to display selected portions of said information data.

The unit additionally includes a bill acceptor secured to said support structure and operatively connected to said processor effective to cause said processor to authorize at least a portion of said information to be displayed on said CRT display.

The unit additionally includes a local area network controller operatively connected to said processor adapted to transmit said information data to other location units.

Said information data includes a plurality of categories of data stored by category in said digital memory.

At least one of said categories of data is broken down and stored by subsets in said digital memory.

Said processor additionally includes a clock/calendar and wherein said digital memory includes timing data associated with selected elements of said information data.

The unit includes program means for causing said processor to selectively display on said CRT display said selected elements according to said timing data.

**Claims**

1. A consumer communication and information system comprising:
a support structure;
a pay telephone secured to said support structure;

display means secured to said support structure for generating an electronic public information display; and
storage means operatively associated with said display means and secured within said structure for storing consumer information for display on said display means.

2. The system of Claim 1 wherein said display means includes a display device secured within said structure.

3. The system of Claim 1 wherein said display means includes a display device secured to said pay telephone.

4. The system of Claim 1 wherein said storage means includes a memory means for storing in digital form said consumer information.

5. The system of Claim 4 wherein at least a portion of said consumer information is in video graphic form.

6. The system of Claim 4 wherein at least a portion of said consumer information is in textual form.

7. The system of Claim 1 wherein said pay telephone is operatively connected to said storage means by control means for transmitting said consumer information from said pay telephone to said storage means.

8. The system of Claim 4 wherein said display means includes processor means operatively connected to a display.device for selectively generating said.consumer information on said display device in a predetermined sequence.

9. The system of Claim 7 wherein at least a portion of the consumer information is stored in said storage means in a plurality of individually selectable display frames.

10. The system of Claim 9 wherein said display means includes processor means operatively connected to a display device for selectively generating said display frames on said display device in a predetermined sequence.

11. The system of Claim 10 herein said processor means selects for display on said display device at least one of said display frames according to a predetermined time schedule stored in said storage means.

12. The system of Claim 11 wherein said predetermined time schedule is transmitted from said pay telephone to said storage means.

# FIG. 1

EP 0 344 672 A1

FIG. 2   68   70   12

78   80

72

104

74   76

FIG. 3

# FIG. 4

114

NEXT | LAST | PAUSE

116 118 120

# FIG. 5

124

122

SELECT CATEGORY

LOCAL NEWS
NATIONAL NEWS
WEATHER
SPORTS
STOCKS

126

## FIG. 6

130 → 
128

```
       SELECT   EXCHANGE

   AMERICAN
   NEW YORK
   NASDAC
        ⋮
```

## FIG. 7

132 →
134

```
          SELECT

  MOST ACTIVE
  WINNERS
  LOOSERS
  CLOSING
```

136

## FIG. 8

138

```
SELECT FIRST  LETTER
      OF SYMBOL

  A B C D . . . . . . .
  . . . . . .      . . . . W X Y Z
```

140 →

## FIG. 9

| STOCK | HIGH | LOW | CLOSE |
|-------|------|-----|-------|
| CBS | 149 1/2 | 147 3/4 | 148 3/8 |
| . | . | . | . |
| . | . | . | . |
| . | . | . | . |
| . | . | . | . |
| . | . | . | . |
| . | . | | |
| . | . | | |
| CNA | 53 1/2 | 53 1/8 | 53 3/8 |

| NEXT STOCK | QUIT | |
|------------|------|--|

| UP ↑ | DOWN ↓ | PAUSE | RESUME ↑ |

## FIG. 10A

```
         ┌──────────────────┐
         │   STORE  DATA    │──── 158
         │  IN CATEGORIES   │
         └──────────────────┘
                  │
                  ▼
         ┌──────────────────────┐
         │ GENERATE  INDEX  TO  │
         │ LOCATIONS OF CATE-   │──── 160
         │ GORIES IN MEMORY     │
         └──────────────────────┘
                  │
                  ▼
         ┌──────────────────────────┐
         │ GENERATE INDEX POINTERS  │
         │ TO SUBSETS OF INFORMATION │──── 164
         │ CONTAINED  IN MEMORY      │
         └──────────────────────────┘
```

196

```
         ┌──────────────────┐
         │ DISPLAY  MENUE   │──── 166
         │ OF CATEGORIES    │
         └──────────────────┘
                  │
                  ▼
```

168

```
   NO      USER SELECTS
  ◄─────   CATEGORY
                  │ YES
                  ▼
         ┌──────────────────────┐
         │ DISPLAY  MENUE  OF   │
         │ SUBSETS  OF SELECTED │──── 170
         │ CATEGORY             │
         └──────────────────────┘
                  │
                  ▼
```

172

```
   NO      USER SELECTS
  ◄─────   SUBSET
```

174          YES

FIG. 10B

174

IDENTIFY SELECTED
SUBSET INDEX POINTER — 176

DISPLAY PORTION OF
SUBSET CORRESPONDING — 178
TO INDEX POINTER

180

USER
CONTROL
INPUT

YES → PAUSE — 184

YES

NO

NO

182

INCREMENT
POINTER

YES ← UP — 186

NO

190

DECREMENT
POINTER

YES ← DOWN — 188

NO

YES → RESUME — 192

NO

YES ← QUIT — 194

196

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 432 935 (STANDARD ELEKTRIK LORENZ AG) * Claims 1,4; page 5, line 1 - page 6, line 10; page 8, lines 1-27; figures 1-3 * | 1-2,4-7 | G 09 F 27/00 H 04 M 11/08 |
| X | PATENT ABSTRACTS OF JAPAN, vol. 10, no. 221 (E-424)[2277], 2nd August 1986; & JP-A-61 58 368 (SEIICHI OHASHI) 25-03-1986 * Abstract; figures * | 1,3 | |
| A | EP-A-0 113 022 (STANDARD ELEKTRIK LORENZ AG) * Page 1, line 1 - page 3, line 25; figure 1 * | 1,4,8-11 | |
| A | DE-B-2 819 633 (STANDARD ELEKTRIK LORENZ AG) * Claims 1,3-5; column 3, line 17 - column 4, line 39; column 5, lines 15-32; figures 1,2 * | 1,4,6 | |
| | | | TECHNICAL FIELDS SEARCHED (Int. Cl.4) G 09 F H 04 M |

The present search report has been drawn up for all claims

| Place of search | Date of completion of the search | Examiner |
|---|---|---|
| THE HAGUE | 18-09-1989 | FRANSEN L.J.L. |